# FASCICULE DE BREVET EUROPEEN

(11) **EP 3 218 539 B1**
(45) Date de publication et mention de la délivrance du brevet: **10.08.2022**
(21) Numéro de dépôt: 15804890.0
(22) Date de dépôt: 10.11.2015
(51) Int. Cl.: D06F 75/12, C02F 1/46, C02F 1/00

(54) **APPAREIL COMPORTANT UNE ANODE ET UNE CATHODE POUR FAIRE PRECIPITER LE CARBONATE DE CALCIUM**
VORRICHTUNG MIT EINER ANODE UND EINER KATHODE ZUR FÄLLUNG VON CALCIUMCARBONAT
APPARATUS COMPRISING AN ANODE AND A CATHODE FOR PRECIPITATING CALCIUM CARBONATE

(30) Priorité: 14.11.2014 FR 1460982
(43) Date de publication de la demande: 20.09.2017
(73) Titulaire: SEB S.A., 69130 Ecully (FR); Institut National des Sciences Appliquées de Lyon, 69621 Villeurbanne Cedex (FR); Université Claude Bernard Lyon 1, 69622 Villeurbanne Cedex (FR); Le Centre National de la Recherche Scientifique, 75794 Paris (FR)
(72) Inventeur: CORDIER, Thomas, 69008 Lyon (FR); DUBOST, Jean-Philippe, 33600 Pessac (FR); GELUS, Dominique, 38780 Pont-eveque (FR); LEBOEUF, Stéphane, 74150 Rumilly (FR); NORMAND, Bernard, 69400 Arnas (FR)
(74) Mandataire: SEB Développement
(86) Numéro de dépôt international: PCT/FR2015/053045
(87) Numéro de publication internationale: WO 2016/075406

(56) Documents cités:
- WO-A1-2009/030633
- US-A1- 2014 027 288

## Description

La présente invention se rapporte au domaine général des appareils, notamment électroménagers à usage domestique, comportant un réservoir principal destiné à contenir de l'eau et un réservoir intermédiaire alimenté par le réservoir principal, le réservoir intermédiaire comprenant un système de traitement de l'eau permettant de faire précipiter le carbonate de calcium.

Il est connu de la demande de brevet US2014/027288, un appareil comportant un réservoir comprenant une cathode, une anode et une membrane échangeuse d'ions de décomposition de l'eau.

Il est connu, de la demande de brevet FR3005666 déposée par la demanderesse, un appareil de repassage comportant un réservoir principal contenant de l'eau et un générateur de vapeur relié au réservoir principal par un circuit d'alimentation comportant une anode et une cathode disposées dans un réservoir intermédiaire pour faire précipiter le carbonate de calcium, et les autres espèces ioniques en présence, dans ce réservoir intermédiaire. Dans ce document, le réservoir intermédiaire comprend un filtre formant une barrière filtrante divisant le volume à l'intérieur du réservoir intermédiaire entre une chambre primaire recevant la cathode, alimentée avec l'eau du réservoir principal, et une chambre secondaire recevant l'anode, dans laquelle l'eau est puisée pour être envoyée dans le générateur de vapeur.

Un tel appareil électroménager présente l'avantage de posséder un système de traitement de l'eau efficace, limitant le phénomène d'entartrage et permettant ainsi d'augmenter la durée de vie de l'appareil.

Un but de la présente invention est d'améliorer les performances du système de traitement de l'eau équipant l'appareil tel que décrit dans la demande de brevet FR3005666.

A cet effet, l'invention a pour objet un appareil, notamment électroménager à usage domestique, comportant un réservoir principal destiné à contenir de l'eau et un réservoir intermédiaire alimenté par le réservoir d'eau, le réservoir intermédiaire comprenant une cathode et une anode destinées à faire précipiter le carbonate de calcium et les autres espèces ioniques en présence, et comportant un filtre formant une barrière filtrante divisant le volume à l'intérieur du réservoir intermédiaire entre une chambre primaire recevant la cathode, alimentée avec l'eau du réservoir principal, et une chambre secondaire recevant l'anode et comprenant au moins un orifice de puisage au niveau duquel l'eau est puisée pour être utilisée dans un dispositif, l'anode comprenant deux extrémités longitudinales entre lesquelles elle s'étend longitudinalement selon un axe X, ledit au moins un orifice de puisage étant, en projection orthogonale sur l'axe X, situé entre les deux extrémités de l'anode.

Un tel appareil présente l'avantage de posséder un orifice de puisage qui est disposé dans une zone où les lignes de champ électrique s'établissent entre l'anode et la cathode et donc là où le processus d'électro-décarbonatation, et donc l'adoucissement de l'eau, s'effectue en priorité.

Selon une autre caractéristique de l'invention, l'anode s'étend longitudinalement sur une longueur L et l'orifice de puisage est, en projection orthogonale sur l'axe X, compris entre deux bornes placées respectivement à 10% et à 90% de la longueur L de l'anode et préférentiellement situé entre deux bornes placées respectivement à 30% et à 70% de la longueur L de l'anode.

Une telle caractéristique permet de venir puiser dans une zone relativement centrale de l'anode où les lignes de champ électrique sont les plus importantes.

Selon une autre caractéristique de l'invention, la distance entre l'orifice de puisage et l'anode est comprise entre 0 et 1cm.

Une telle caractéristique permet de venir puiser l'eau au voisinage immédiat de l'anode, c'est-à-dire là où la déminéralisation de l'eau s'effectue le plus rapidement.

Selon une autre caractéristique de l'invention, le réservoir intermédiaire comporte un fond plat et l'orifice de puisage est distant du fond du réservoir intermédiaire d'au moins 1 cm.

Une telle caractéristique permet d'éviter que des particules reposant dans le fond du réservoir intermédiaire ne soient aspirées par l'orifice de puisage.

Selon encore une autre caractéristique de l'invention, l'eau est puisée dans la chambre secondaire au niveau de plusieurs orifices de puisage répartis le long de l'anode.

Une telle caractéristique permet de diminuer la vitesse d'écoulement au travers des orifices de puisage et donc de diminuer le phénomène d'aspiration au voisinage des orifices de puisage, l'eau ainsi prélevée entrainant moins de particules de tartre susceptibles de passer au travers du filtre. De plus, la répartition des orifices de puisage le long de l'anode permet de diminuer encore le degré de dureté de l'eau envoyée vers le dispositif en venant puiser l'eau en différents points le long de l'anode où l'eau est la plus rapidement déminéralisée.

Selon une autre caractéristique de l'invention, les différents orifices de puisage sont répartis sur le pourtour de l'anode.

Selon une autre caractéristique de l'invention, le filtre présente une porosité adaptée pour ne laisser passer que les particules présentant une taille inférieure à 50 µm et préférentiellement inférieure ou égale à 20 µm

Une telle caractéristique permet d'assurer la rétention dans la chambre primaire des particules de tartre les plus grosses, qui sont notamment les plus néfastes dans le cas où le dispositif est un générateur de vapeur destiné à produire de la vapeur pour un appareil de repassage et/ou défroissage. Une telle caractéristique permet également d'obtenir une bonne filtration des cristaux de tartre et des autres précipités avec une vitesse de colmatage du filtre réduite.

Selon encore une autre caractéristique de l'invention, le filtre présente une forme cylindrique.

Selon une autre caractéristique de l'invention, le réservoir intermédiaire comporte une électrode centrale située à l'intérieur du filtre et une électrode périphérique de forme cylindrique s'étendant autour du filtre et de l'électrode centrale, les électrodes centrale et périphérique étant reliées à un circuit d'alimentation électrique pour former l'anode ou la cathode.

Selon une autre caractéristique de l'invention, une tension continue de 20 à 50 V, et préférentiellement de l'ordre de 40 V, est appliquée entre l'anode et la cathode, avec une intensité maximale de 1A.

De telles caractéristiques permettent d'obtenir un adoucissement de l'eau qui est particulièrement adapté à une utilisation dans un appareil électroménager.

Selon une autre caractéristique de l'invention, l'anode est constituée par une électrode centrale en titane, avantageusement revêtue d'oxyde de ruthénium ou d'iridium, et la cathode est constituée par une électrode périphérique en graphite, avantageusement en graphite grossier ou à grains moyens.

Selon une autre caractéristique de l'invention, l'anode est creuse et l'orifice de puisage est disposé à l'intérieur de l'anode creuse.

Une telle caractéristique permet d'améliorer encore les performances de déminéralisation de l'eau en forçant l'eau à s'écouler le long de l'anode, c'est à dire là où le processus d'électro-décarbonatation est le plus important, avant de s'écouler au travers de l'orifice de puisage. De plus, une telle caractéristique permet d'augmenter la surface de l'anode échangeant avec l'eau et d'obtenir un ratio de surface entre anode et cathode se rapprochant de 1, pour une meilleure efficacité de fonctionnement.

Selon une autre caractéristique de l'invention, l'anode est constituée par une électrode périphérique en graphite ou en nickel ou en titane, avantageusement revêtu de ruthénium ou d'iridium, et la cathode est constituée par une électrode centrale en inox, avantageusement tissé.

Selon une autre caractéristique de l'invention, le réservoir intermédiaire comporte un orifice de vidange permettant d'évacuer le contenu de la chambre primaire, recevant l'anode.

Selon une autre caractéristique de l'invention, l'appareil comporte une réserve d'eau qui est alimentée par gravité par l'orifice de puisage et une pompe venant puiser de l'eau dans la réserve pour l'envoyer vers le dispositif.

Une telle réserve présente l'avantage de constituer un volume tampon d'eau déminéralisée dans lequel la pompe peut venir puiser l'eau destinée à être envoyée dans le dispositif. En particulier, ce volume tampon d'eau déminéralisée permet d'alimenter ponctuellement le dispositif avec un débit supérieur à la capacité de production du système de traitement de l'eau du réservoir intermédiaire. En effet, le système de traitement de l'eau fonctionnant en continu lorsque l'appareil est alimenté électriquement, il est possible, grâce à la réserve, d'alimenter ponctuellement la pompe avec un débit supérieur au débit moyen d'eau déminéralisée fournit par le système de traitement, la pompe n'étant utilisée que lors de phases de quelques secondes pour alimenter le dispositif.

Selon une autre caractéristique de l'invention, l'orifice de puisage est formé par l'extrémité supérieure d'un tuyau d'évacuation reliant le réservoir intermédiaire à la réserve d'eau.

Selon une autre caractéristique de l'invention, l'eau est puisée dans la chambre secondaire avec un débit maximum compris entre 10 et 75 g/min et avantageusement de l'ordre de 50 g/min.

Une telle caractéristique permet d'éviter de ponctionner trop rapidement l'eau dans la chambre secondaire et d'éviter que l'eau ne soit puisée avant que le processus d'électro-décarbonatation dans la réserve intermédiaire n'ait permis d'abaisser suffisamment le degré de dureté de l'eau pour avoir un bénéfice important sur la durée de vie de l'appareil.

Selon encore une autre caractéristique de l'invention, l'alimentation du réservoir intermédiaire est régulée pour avoir un niveau d'eau H constant dans le réservoir intermédiaire lorsque le réservoir d'eau n'est pas vide.

Une telle caractéristique permet d'obtenir un débit contrôlé de l'eau s'écoulant par gravité au travers du ou des orifices puisage.

Selon encore une autre caractéristique de l'invention, le réservoir principal comporte une enceinte fermée comprenant un orifice de sortie débouchant dans le réservoir intermédiaire, l'orifice de sortie constituant le seul évent du réservoir principal de sorte que l'eau du réservoir principal se déverse par gravité dans le réservoir intermédiaire jusqu'à ce que le niveau d'eau dans le réservoir intermédiaire atteigne le niveau de l'orifice de sortie du réservoir principal.

Un tel réservoir principal présente l'avantage de constituer une solution simple et économique à mettre en œuvre, permettant d'obtenir un niveau d'eau constant dans le réservoir intermédiaire.

Selon encore une autre caractéristique de l'invention, le filtre est en acier inox et préférentiellement en acier inox chargé de titane.

Selon encore une autre caractéristique de l'invention, le filtre est revêtu de ruthénium ou de platine.

Une telle caractéristique permet d'éviter la corrosion du filtre.

Selon encore une autre caractéristique de l'invention, le dispositif est un dispositif pour faire chauffer de l'eau, tel un bloc chauffant d'une cafetière ou un générateur de vapeur d'un appareil de repassage/défroissage.

Selon encore une autre caractéristique de l'invention, l'appareil comporte une base génératrice de vapeur reliée par un cordon à un fer à repasser, la base intégrant le générateur de vapeur et le réservoir principal d'eau, ce dernier étant avantageusement monté de manière amovible sur la base.

On comprendra mieux les buts, aspects et avantages de la présente invention d'après la description donnée ci-après d'un mode particulier de réalisation de l'invention, présenté à titre d'exemple non limitatif, en se référant aux dessins annexés dans lesquels :
- la figure 1 représente une vue schématique d'un appareil de repassage selon un premier mode de réalisation de l'invention,
- la figure 2 est une vue en coupe longitudinale de la base génératrice de vapeur de l'appareil de repassage illustré schématiquement sur la figure 1,
- la figure 3 représente une vue schématique d'une variante de réalisation de l'appareil de repassage selon le premier mode de réalisation,
- la figure 4 représente une vue schématique d'un appareil de repassage selon un deuxième mode de réalisation de l'invention,
- la figure 5 est une vue en coupe longitudinale de la base génératrice de vapeur de l'appareil de repassage illustré schématiquement sur la figure 4.

Seuls les éléments nécessaires à la compréhension de l'invention ont été représentés. Pour faciliter la lecture des dessins, les mêmes éléments portent les mêmes références d'un mode de réalisation à l'autre.

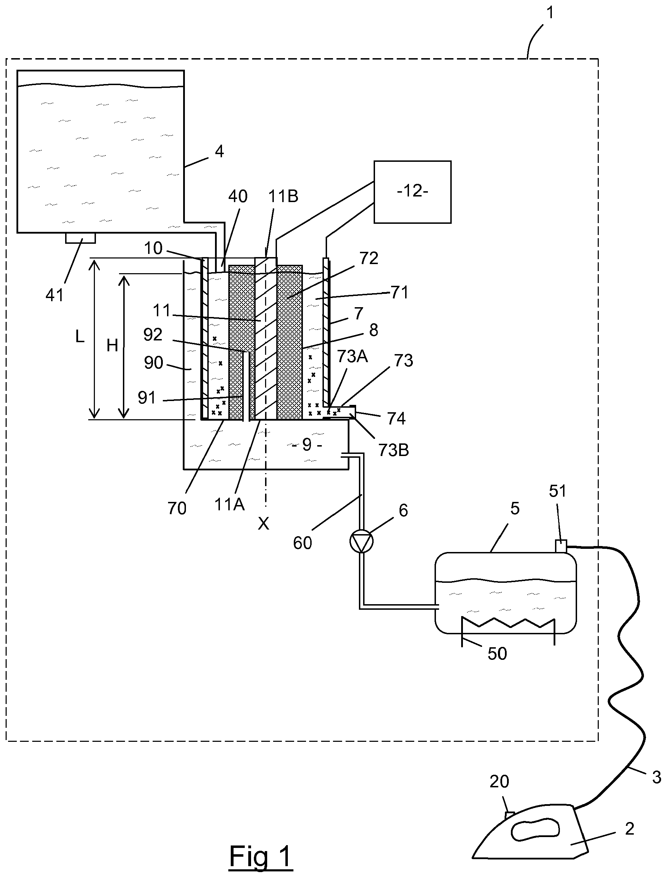

La figure 1 représente schématiquement un appareil électroménager de repassage selon un premier mode de réalisation de l'invention, l'appareil comportant une base 1 pour la production de vapeur et un fer à repasser 2 comprenant une semelle munie de trous de sortie de vapeur, le fer à repasser 2 étant relié à la base 1 par un cordon 3.

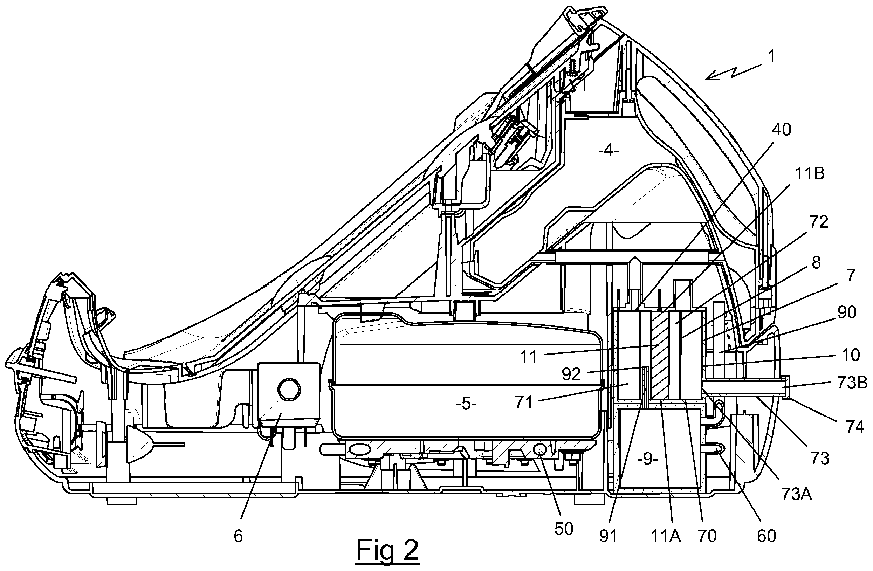

Conforment aux figures 1 et 2, la base 1 comporte un réservoir principal 4 amovible, d'une capacité de l'ordre de 1,5 litre, destiné à contenir de l'eau, et un générateur de vapeur constitué par une cuve 5 comprenant une résistance chauffante 50 d'une puissance de l'ordre de 1400 W permettant de produire de la vapeur sous une pression de l'ordre de 4 à 6 bars, la cuve 5 comportant une électrovanne 51 reliée au cordon 3 du fer à repasser et commandée par un bouton 20 disposé sur le fer à repasser 2.

La cuve 5 est alimentée avec de l'eau en provenance du réservoir principal 4 au moyen d'un circuit d'alimentation comprenant une pompe 6 de circulation disposée juste en amont de la cuve 5, cette pompe 6 étant commandée par une carte de pilotage, non représentée sur les figures, et permettant d'injecter l'eau dans la cuve 5 sous une pression pouvant atteindre 15 bars.

Le circuit d'alimentation de la cuve 5 comporte, en amont de la pompe 6, un système de traitement de l'eau comprenant un réservoir intermédiaire 7 comportant un fond 70 plat et une paroi périphérique cylindrique de section circulaire s'étendant verticalement. Le réservoir intermédiaire 7 reçoit un filtre 8 qui s'étend longitudinalement selon un axe X vertical depuis le fond 70 sur sensiblement toute la hauteur du réservoir intermédiaire 7, le filtre 8 présentant la forme d'un cylindre de section circulaire formant une barrière filtrante entre une chambre primaire 71 externe, de forme annulaire, dans laquelle débouche un orifice de sortie 40 du réservoir principal 4 et une chambre secondaire 72, disposée à l'intérieur du filtre 8.

A titre d'exemple, le réservoir intermédiaire 7 présente un diamètre interne de l'ordre de 8 cm et une hauteur de l'ordre de 12 cm pour un volume de l'ordre de 600 cm³. Le filtre 8 est avantageusement réalisé en acier inox, préférentiellement chargé de titane et revêtu de ruthénium ou de platine, et présente un diamètre de l'ordre de 3 cm, une hauteur de l'ordre 12 cm, et des porosités de l'ordre de 20 µm.

Le réservoir intermédiaire 7 comprend des moyens pour faire précipiter le tartre comprenant une cathode 10 et une anode 11 alimentées en courant par une unité de contrôle 12 appliquant une tension continue de 40V avec une intensité maximale de 1A.

La cathode 10 est avantageusement reliée à l'unité de contrôle 12 par une connectique qui s'étend en dehors du réservoir intermédiaire 7 et qui présente une section qui évolue progressivement en devenant de plus en plus large en s'approchant de la cathode 10, une telle caractéristique permettant d'éviter une concentration de courant au niveau de la connexion avec la cathode 10 qui contribue à la destruction progressive de la cathode 10 lorsque cette dernière est réalisée en graphite.

La cathode 10 est préférentiellement constituée par une électrode périphérique, en graphite grossier ou à grains moyens, disposée dans la chambre primaire 71, et présente un corps cylindrique qui épouse la forme de la paroi périphérique du réservoir intermédiaire 7. A titre d'exemple, la cathode 10 s'étend longitudinalement selon l'axe X, sur toute la hauteur du réservoir intermédiaire 7, et présente un diamètre externe de 8 cm et une épaisseur de l'ordre de 5 mm.

L'anode 11 est constituée par une électrode présentant la forme d'une tige qui est plongée au centre de la chambre secondaire 72 de telle sorte à être inscrite dans le volume défini par le corps cylindrique de la cathode 10. L'anode 11 s'étend longitudinalement selon l'axe X sur une longueur L et comporte une extrémité inférieure 11A venant au contact du fond 70 ainsi qu'une extrémité supérieure 11B parvenant au sommet du réservoir intermédiaire 7.

L'anode 11 est préférentiellement réalisée en titane, avantageusement revêtue de ruthénium ou d'iridium, pour éviter son oxydation, et présente la forme d'une tige de diamètre 10 mm.

La paroi périphérique du réservoir intermédiaire 7, ainsi que le corps périphérique de la cathode 10, sont avantageusement traversés par une ouverture 73A disposée à proximité du fond 70 du réservoir intermédiaire, cette ouverture 73A mettant en communication la chambre primaire 71 avec un conduit de vidange 73 dont l'extrémité est munie d'un orifice de vidange 73B fermé par un bouchon 74 amovible accessible depuis l'extérieur de la base 1. A titre d'exemple, le conduit de vidange 73 et l'ouverture 73A pourront présenter un diamètre de l'ordre de 2 cm afin de permettre un écoulement rapide du liquide contenu dans la chambre primaire 71 au travers du conduit de vidange 73 lors de l'ouverture du bouchon 74.

La chambre secondaire 72 communique avec une réserve 9 ménagée sous le fond 70 du réservoir intermédiaire 7 au moyen d'un tuyau d'évacuation 91 traversant le fond 70 pour faire saillie dans la chambre secondaire 72, le tuyau d'évacuation 91 comprenant une extrémité supérieure ouverte définissant un orifice de puisage 92 qui, en projection orthogonale sur l'axe X, est situé entre les deux extrémités 11A, 11B de l'anode.

De manière préférentielle, le tuyau d'évacuation 91 est situé plus près de l'anode 11 que du filtre 8 de manière à puiser l'eau au voisinage de l'anode 11, dans une zone où l'eau est la plus déminéralisée.

Le tuyau d'évacuation 91 s'étend avantageusement verticalement à l'intérieur du réservoir intermédiaire 7 sur une hauteur d'au moins 1 cm et préférentiellement de l'ordre de 3 à 5 cm de manière à ce que l'orifice de puisage 92 se trouve, en projection orthogonal sur l'axe X, compris entre deux bornes placées respectivement à 10% et à 90% de la longueur L de l'anode 11 et préférentiellement situé entre deux bornes placées respectivement à 30% et à 70% de la longueur L de l'anode 11, c'est-à-dire dans une zone de la chambre secondaire où les lignes de courant s'établissant entre la cathode 10 et l'anode 11 sont les plus importantes.

L'alimentation du réservoir intermédiaire 7 est avantageusement régulée de manière à avoir un niveau d'eau H dans le réservoir intermédiaire 7 constant lorsque de l'eau est présente dans le réservoir principal 4. A cet effet, le réservoir principal 4 présente la forme d'une enceinte fermée dans laquelle l'orifice de sortie 40 constitue le seul évent du réservoir principal 4. Le réservoir principal 4 comporte également un orifice de remplissage qui est fermé par un bouchon étanche 41, visible sur la figure 1, et qui permet un remplissage aisé du réservoir principal 4 en position retournée.

De manière préférentielle, le tuyau d'évacuation 91 est calibré pour laisser passer l'eau par gravité avec un débit de l'ordre de 50 g/min lorsque le niveau d'eau dans le réservoir intermédiaire 7 est égal au niveau d'eau H, le tuyau d'évacuation 91 comprenant avantageusement une section de passage circulaire constante présentant un diamètre de l'ordre 2 mm.

Comme on peut le voir sur les figures 1 et 2, la réserve 9 comporte un conduit d'évent 90 qui s'étend le long du réservoir intermédiaire 7 jusqu'à une hauteur supérieure au niveau d'eau H dans le réservoir intermédiaire 7, la pompe 6 comportant un tuyau d'admission 60 qui vient puiser l'eau de la réserve 9. De manière préférentielle, l'extrémité inférieure du tuyau d'admission 60 est distante du fond de la réserve 9 de quelques centimètres afin d'éviter de puiser les éventuelles particules venant se déposer par décantation dans le fond de la réserve 9. A titre d'exemple, l'extrémité inférieure du tuyau d'admission 60 sera distante d'au moins 1 cm du fond de la réserve 9, cette dernière présentant un volume de l'ordre de 150 cm³.

Le fonctionnement et les avantages de l'appareil ainsi réalisé vont maintenant être décrits.

Lors de l'utilisation de l'appareil, l'utilisateur rempli le réservoir principal 4 amovible puis le place sur la base 1 de manière à ce que l'eau contenue dans le réservoir principal 4 se déverse par gravité dans le réservoir intermédiaire 7 jusqu'à atteindre le niveau de l'orifice de sortie 40 à partir duquel l'eau dans le réservoir intermédiaire 7 vient empêcher l'air de pénétrer dans le réservoir principal 4, ce qui stoppe automatiquement l'écoulement de l'eau du réservoir principal 4 vers le réservoir intermédiaire 7.

L'utilisateur met ensuite l'appareil en fonctionnement, ce qui provoque l'alimentation de la résistance chauffante 50 de la cuve 5 sous le contrôle d'une électronique de régulation associée à un capteur de température non représentés sur les figures, et l'application constante d'une tension continue de 40V aux bornes de l'anode 11 et de la cathode 10.

Il s'établit alors une phase de préchauffage, de l'ordre de 2 min, pendant laquelle l'appareil n'est pas utilisable par l'utilisateur. Durant cette phase de préchauffage, la cuve 5 monte progressivement en température pour produire de la vapeur sous pression et la semelle du fer à repasser 2 est amenée à la température de consigne.

La tension appliquée entre l'anode 11 et la cathode 10 durant toute la durée de fonctionnement de l'appareil, et notamment durant la phase de préchauffage provoque, de manière connue en soi, le déplacement vers la cathode 10 des ions positifs Ca²⁺ et Mg²⁺, et des autres cations en présence, en traversant si nécessaire les pores du filtre 8, puis la précipitation de carbonate de calcium sous la forme de cristaux de calcites ou de vatérites d'une taille de 5 à 100 µm dans la chambre primaire 71 où se forme un environnement basique du fait de la production d'ions OH⁻.

L'eau déminéralisée produite dans la chambre secondaire 72 au voisinage de l'anode 11 s'écoule par gravité dans le tuyau d'évacuation 91 pour tomber dans la réserve 9. Les cristaux de tartre présentant une taille supérieure à 20 µm qui se forment progressivement dans la chambre primaire 71 sont bloqués dans cette dernière par le filtre 8, le faible débit d'eau au travers du tuyau d'évacuation 91 présentant l'avantage de limiter les risques de colmatage du filtre 8 en ne produisant qu'une très faible aspiration au voisinage du filtre 8.

Afin d'éviter l'entartrage trop rapide de la cathode 10, l'appareil comprend régulièrement une phase de fonctionnement de quelques secondes durant laquelle la polarité à la cathode 10 et à l'anode 11 est inversée, cette inversion de la polarité pouvant intervenir toutes les dix minutes.

De manière préférentielle, le colmatage du filtre 8 est également retardé en polarisant de manière cyclique le filtre 8, qui est réalisé en matériau électriquement conducteur, cette polarisation étant effectuée en mettant temporairement le filtre 8 au potentiel électrique de l'anode 11, afin que le champ électrique s'établissant entre le filtre 8 et la cathode 10 repousse les particules de tartre en direction de la cathode 10. A titre d'exemple, le filtre 8 sera relié pendant 10 secondes au potentiel de l'anode 11 toutes les 40 secondes.

Les cristaux de tartre de taille inférieure à 20 µm restent également majoritairement prisonniers de la chambre primaire 71 grâce aux micro dégagement gazeux autour du filtre et à la présence du courant électrique qui attire les ions calcium vers la cathode 10 et à la très faible aspiration provoquée par l'écoulement de l'eau déminéralisée à faible débit au travers du tuyau d'évacuation 91, les éventuels cristaux traversant le filtre 8 allant se déposer par gravité dans le fond de la réserve 9.

Lorsqu'il est nécessaire d'alimenter en eau la cuve 5 pour produire de la vapeur, la carte de pilotage commande le fonctionnement de la pompe 6 qui vient puiser l'eau déminéralisée dans la réserve 9 par le tuyau d'admission 60, à distance du fond pour éviter d'aspirer les cristaux de tartre pouvant se déposer dans le fond de la réserve 9.

Cet acheminement de l'eau vers la cuve 5 s'effectue par des phases de fonctionnement séquencées de la pompe 6, même lorsque l'utilisateur actionne en permanence le bouton 20 de vapeur du fer à repasser 2, la pompe 6 fonctionnant par exemple avec un débit de 300 gr/min sur une durée de 3 secondes toutes les 12 secondes. Un tel fonctionnement séquentiel de la pompe 6 permet d'éviter un fonctionnement à vide de la pompe 6 en établissant des phases d'arrêt de la pompe 6 durant lesquelles la baisse du niveau d'eau dans la réserve 9 peut être compensée par l'arrivée d'eau déminéralisée s'effectuant par gravité au travers du tuyau d'évacuation 91.

L'écoulement d'eau déminéralisée du réservoir intermédiaire 7 vers la réserve 9 est automatiquement compensé par le remplissage automatique de la chambre primaire 71 avec de l'eau en provenance du réservoir principal 4 lorsque le niveau dans le réservoir intermédiaire 7 est inférieur au niveau d'eau H, l'appareil étant avantageusement équipé d'un capteur de détection de réservoir principal 4 vide, non représenté sur les figures, qui interrompt le fonctionnement de la pompe 6 lorsque le réservoir principal 4 est vide, un tel arrêt de la pompe 6 permettant de garantir la présence d'eau dans le réservoir intermédiaire 7 et donc la production permanente d'eau déminéralisée lorsque l'appareil est sous tension.

Après plusieurs heures d'utilisation de l'appareil, l'utilisateur est invité à effectuer une opération de vidange des cristaux de tartres formés dans la chambre primaire 71 du réservoir intermédiaire 7, en plaçant par exemple l'appareil au dessus d'un évier ou en disposant un récipient sous l'orifice de vidange, puis en ouvrant le bouchon 74 de manière à ce que l'eau contenue dans la chambre primaire 71 s'évacue par gravité au travers de l'orifice de vidange 73B en emmenant avec elles les cristaux de carbonate de calcium qui s'y sont formés.

Bien entendu, l'appareil pourra comporter un indicateur visuel ou sonore alertant l'utilisateur de la nécessité d'effectuer une telle opération de vidange, cet indicateur pouvant par exemple être activé en fonction du nombre d'heures de fonctionnement de l'appareil ou en fonction du nombre de litres s'étant écoulés au travers du circuit d'alimentation de la cuve.

L'appareil ainsi réalisé présente l'avantage de posséder un système de traitement de l'eau simple et économique à réaliser, qui permet de fournir une eau déminéralisée pouvant être utilisée dans le générateur de vapeur pour une plus grande longévité de l'appareil. En particulier, l'emplacement de l'orifice de puisage 92 en bordure de l'anode 11, dans une zone se trouvant disposée entre les deux extrémités longitudinales 11A, 11B de l'anode, permet de puiser l'eau dans un endroit où les lignes de courant s'établissant entre l'anode 11 et la cathode 10 sont les plus fortes, c'est-à-dire où l'action de déminéralisation de l'eau par l'anode 11 est la plus importante. On obtient ainsi dans la réserve une eau qui est plus fortement déminéralisée que dans le système de traitement de l'eau connu de l'art antérieur.

Le tableau ci-dessous illustre, à titre d'exemple, les performances sur l'abaissement de la dureté de l'eau pouvant être obtenue avec un tel appareil.

Les tests ont été réalisés une anode en titane recouverte de ruthénium disposée au centre du réservoir intermédiaire et une cathode périphérique en graphite à grains moyens.

Un premier test a été réalisé en ponctionnant l'eau dans la réserve 9 avec un débit continu de 50 gr/min, pour simuler une séance de repassage avec un usage intensif de la vapeur.

### Résultats avec débit de 50 q/min:

| **Temps (min)** | **0** | **4** | **9** | **24** | **34** | **64** | **124** | **244** |
|---|---|---|---|---|---|---|---|---|
| **Tension (V)** | 41,1 | 41,1 | 41,1 | 41,1 | 41,1 | 41,1 | 41,1 | 41,1 |
| **Intensité (A)** | 0,45 | 0,22 | 0,2 | 0,19 | 0,2 | 0,23 | 0,23 | 0,18 |
| **pH** | 7 | 2,7 | 4,7 | 4,1 | 4,7 | 4,4 | 4,1 | 3,8 |
| **CaCo3 (mg/L)** | 290 | 60 | 110 | 90 | 100 | 100 | 90 | 80 |
| **Dureté (°F)** | 29 | 6 | 11 | 9 | 10 | 10 | 9 | 8 |

On constate que l'appareil ainsi réalisé permet d'abaisser la dureté de l'eau envoyée vers la cuve du générateur vapeur d'une valeur initiale de 29°F à une valeur moyenne inférieure à 10°F au bout de seulement quelques minutes de fonctionnement.

Un deuxième test a été réalisé en ponctionnant l'eau dans la réserve 9 avec un débit continu de 25 gr/min, pour simuler une séance de repassage avec un usage moins intensif de la vapeur.

### Résultats avec débit de 25 g/min

| **Temps (min)** | **0** | **4** | **15** | **35** | **60** | **90** |
|---|---|---|---|---|---|---|
| **Tension (V)** | 40,38 | 40,38 | 40,38 | 40,38 | 40,38 | 40,38 |
| **Intensité (A)** | 0,4 | 0,3 | 0,26 | 0,25 | 0,27 | 0,26 |
| **CaCo3 (mg/L)** | 290 | 50 | 65 | 60 | 70 | 65 |
| **Dureté (°F)** | 29 | 5 | 6,5 | 6 | 7 | 6,5 |

Avec un débit de 25 g/min entre la chambre secondaire 72 et la réserve 9, l'efficacité est encore accrue, l'action de l'anode 11 et de la cathode 10 dans le réservoir intermédiaire 7 permettant d'abaisser la dureté de l'eau issue du réservoir principal 4 pour l'amener d'une valeur initiale de 29°F à une valeur moyenne inférieure à 7°F lors de son transfert dans la réserve 9.

L'appareil ainsi réalisé présente donc l'avantage de posséder une réserve 9 d'eau déminéralisée, indépendante du réservoir principal 4, dans laquelle la pompe 6 peut venir puiser l'eau pour alimenter le générateur de vapeur. En particulier, cette réserve d'eau déminéralisée a l'avantage d'être produite en continu lorsque l'appareil est alimenté électriquement et d'être stockée dans l'appareil dans un endroit distinct du réservoir principal de l'appareil de sorte qu'elle est immédiatement disponible au démarrage de l'appareil dès la deuxième utilisation de l'appareil. Ainsi, si l'utilisateur vidange le réservoir principal de l'appareil après chaque utilisation ou si le réservoir principal se retrouve vide suite à une utilisation prolongée de l'appareil, l'utilisateur peut remplir de nouveau le réservoir principal et utiliser l'appareil sans attendre que le système de traitement de l'eau ait produit son effet sur l'ensemble du volume d'eau contenu dans le réservoir principal.

L'appareil ainsi réalisé présente donc l'avantage de posséder un générateur de vapeur qui est constamment alimenté avec de l'eau ayant été soumise au système de traitement permettant ainsi de garantir une plus grande longévité à l'appareil.

Enfin, un tel appareil présente l'avantage d'une maintenance aisée, le réservoir intermédiaire pouvant être nettoyé à tout moment en ôtant le bouchon de l'orifice de vidange. De plus, l'utilisateur peut se rendre compte de l'efficacité du système de traitement de l'eau, et de la nécessité d'effectuer une vidange régulière du réservoir intermédiaire, en regardant la quantité de cristaux de carbonate de calcium s'évacuant par l'orifice de vidange, ces cristaux présentant l'avantage d'être parfaitement visible par l'utilisateur.

Dans une variante de réalisation, non représentée, le branchement électrique aux bornes des électrodes pourra être inversé de telle sorte que l'anode soit constituée par l'électrode périphérique et la cathode soit constituée par l'électrode centrale, la chambre secondaire, recevant l'anode, se trouvant alors à l'extérieur du filtre et la chambre primaire, recevant la cathode, se trouvant disposée à l'intérieur du filtre. Dans cette variante de réalisation, l'électrode centrale formant la cathode est préférentiellement réalisée à partir d'une feuille d'inox, avantageusement tissée pour augmenter la surface de contact, et l'électrode périphérique formant l'anode est réalisée en graphite à grain moyens ou grossier, en nickel ou en titane, avantageusement revêtu de ruthénium ou d'iridium. Bien entendu, dans une telle variante de réalisation, le tube d'évacuation se trouve déplacé à l'extérieur du filtre, dans la chambre secondaire, en bordure de l'anode périphérique de manière à ce que l'orifice de puisage se situe toujours au plus près de l'anode et le tuyau de vidange se trouve prolongé de manière à traverser le filtre et à déboucher dans la chambre primaire.

Une telle variante de réalisation permet d'obtenir des performances similaires à celles décrites pour le premier mode de réalisation.

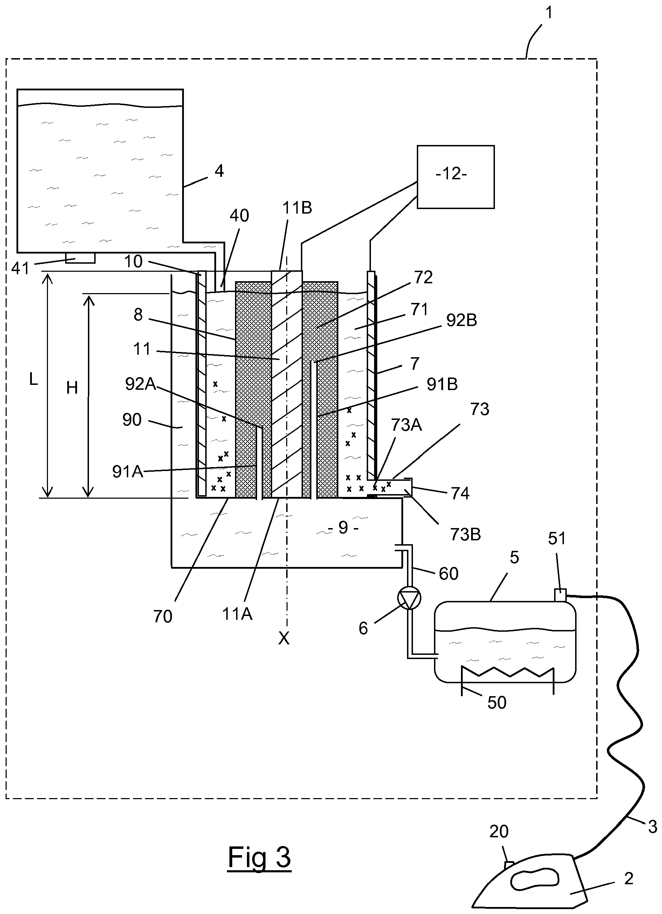

La figure 3 illustre schématiquement une variante de réalisation du premier mode de réalisation illustrée sur la figure 1. Cette variante de réalisation se différencie du premier mode de réalisation seulement par la présence de deux tuyaux d'évacuation 91A, 91B mettant en communication la chambre secondaire 72 avec la réserve 9 d'eau adoucie, à la place du seul tuyau d'évacuation 91 du premier mode de réalisation. Dans cette variante chacun des tuyaux d'évacuation 91A, 91B comprend une extrémité supérieure ouverte qui définie un orifice de puisage 92A, 92B dans lequel l'eau peut s'écouler en direction de la réserve 9, ces deux orifices de puisage 92A, 92B étant avantageusement disposés de part et d'autre de l'anode 11 et étant décalés verticalement l'un par rapport à l'autre, en étant par exemple disposés au 1/3 et au 2/3 de la hauteur de l'anode 11 ,de manière à venir puiser l'eau dans deux zones distinctes en bordure de l'anode 11.

Bien entendu dans cette variante de réalisation, la section de passage des tuyaux d'évacuation 91A, 91B est adaptée pour que le débit total d'eau pouvant s'écouler de la chambre secondaire vers la réserve 9 reste de l'ordre de 50 g/min lorsque le niveau d'eau dans le réservoir intermédiaire 7 est égal au niveau d'eau H.

Une telle variante permet d'optimiser encore le niveau d'adoucissement de l'eau récoltée dans la réserve 9 en venant puiser l'eau à proximité de l'anode 11, dans deux zones distinctes où la déminéralisation de l'eau s'effectue le plus rapidement avec des débits très faibles répartis et donc une moindre aspiration des précipités éventuels ayant pu passer au travers du filtre 8.

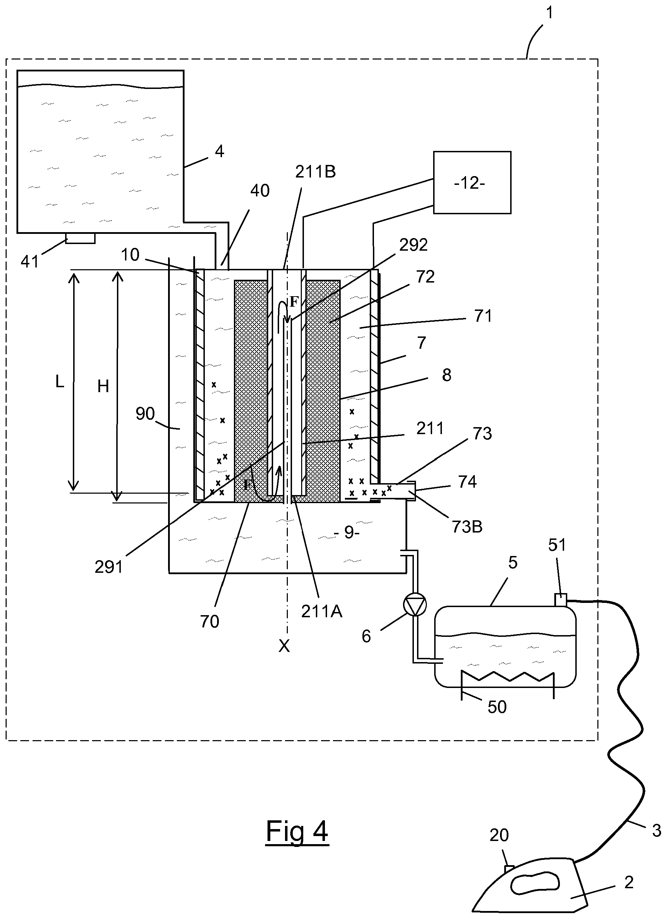

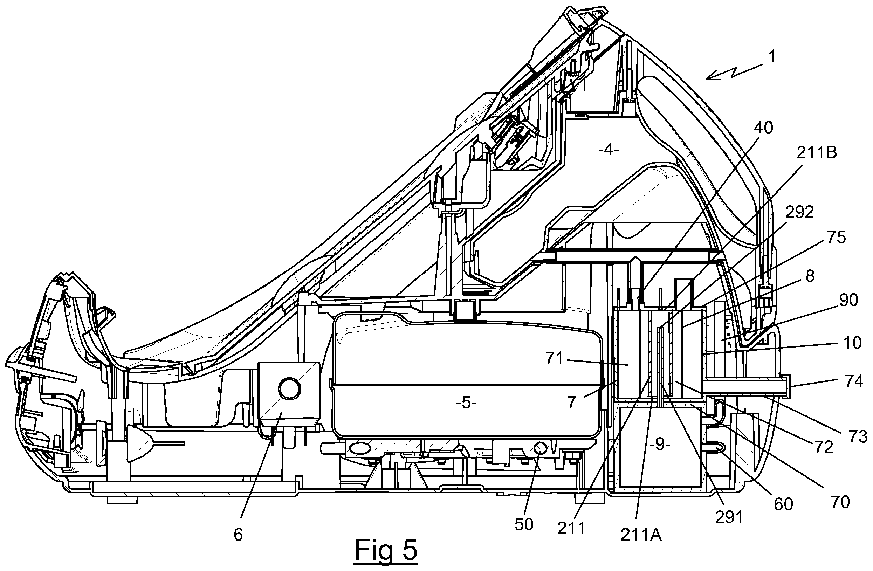

Les figures 4 et 5 illustrent un deuxième mode particulier de réalisation de l'invention. Conformément à ces figures, le deuxième mode de réalisation diffère du premier mode de réalisation seulement par la forme de l'anode et par l'emplacement du tuyau d'évacuation. En conséquence, seuls ces éléments différenciant seront décrits plus en détails dans la suite de la description, les autres éléments restant conforment aux éléments décrits pour le premier mode de réalisation.

Dans le deuxième mode de réalisation, l'anode est constituée par une électrode creuse 211 présentant un corps tubulaire qui est plongé dans la chambre secondaire 72 en étant disposée au centre du réservoir intermédiaire 7, l'anode 211 s'étendant longitudinalement selon l'axe X sur une longueur L légèrement inférieure à la hauteur du réservoir intermédiaire 7.

L'anode 211 est préférentiellement réalisée en titane, avantageusement revêtue d'oxyde de ruthénium ou d'iridium, et présente un diamètre externe de 1,5 cm et une épaisseur de 1 mm.

L'anode 211 comporte une extrémité supérieure 211B qui est fixée sur un couvercle 75, visible sur la figure 5, venant fermer le réservoir intermédiaire 7 et une extrémité inférieure 211A qui se trouve légèrement surélevée par rapport au fond 70 du réservoir intermédiaire de telle sorte que l'eau puisse librement circuler sous l'extrémité inférieure 211A de l'anode.

La chambre secondaire 72 est mise en communication avec la réserve 9 au moyen d'un tuyau d'évacuation 291 qui est disposé dans la partie creuse du corps tubulaire de l'anode 211, le tuyau d'évacuation 291 s'étendant verticalement sur une hauteur de l'ordre de 11 cm de telle sorte qu'il possède à son extrémité supérieure un orifice de puisage 292 se trouvant légèrement en retrait de l'extrémité supérieure de l'anode 211B, par exemple de l'ordre de 1 cm.

Un tel mode de réalisation présente l'avantage d'améliorer encore les performances du système de traitement de l'eau, en abaissant le degré de dureté de l'eau envoyée vers la réserve 9, grâce au parcours forcé suivi par l'eau à l'intérieur de l'anode 211, illustré par les flèches F sur la figure 4. En effet, grâce à une telle construction, l'eau longe l'anode 211 sur sensiblement toute sa hauteur avant de rentrer dans le tuyau d'évacuation 291 de sorte que l'eau passe lentement dans une zone où l'action de déminéralisation est la plus importante avant d'être envoyée dans la réserve 9. De plus, la surface de l'anode 211 au contact de l'eau présente l'avantage d'être augmentée par rapport à la surface de l'anode 11 décrite dans le premier mode de réalisation, ce qui permet d'augmenter les performances du système de traitement de l'eau.

A titre d'exemple, une telle construction permet d'obtenir une dureté de l'eau moyenne de l'ordre de 5°F au bout de quelques minutes de fonctionnement avec un tuyau d'évacuation fournissant un débit de 50 g/mn.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, l'invention pourra être appliquée à tout type d'appareil nécessitant un système de traitement de l'eau pour réduire les nuisances du tartre.

Ainsi dans une variante de réalisation non représentée, l'invention pourra être appliquée à un appareil électroménager à usage domestique de type cafetière, machine à laver, adoucisseur d'eau...

Ainsi, dans une variante de réalisation non représentée, l'eau traitée pourra être puisée au niveau d'un plus grand nombre d'orifices de puisage répartis à la fois le long et autour de l'anode pour améliorer encore les performances d'adoucissement de l'eau fournies par système de traitement de l'eau de l'appareil.

Ainsi, dans une variante de réalisation non représentée, le fond de la réserve pourra comporter un orifice de vidange fermé par un bouchon amovible, accessible par exemple par le dessous de la base, un tel orifice de vidange permettant l'évacuation des éventuels cristaux de tartre se déposant dans la réserve.

Ainsi, dans une autre variante de réalisation non représentée, le réservoir intermédiaire pourra être alimenté avec de l'eau en provenance du réservoir principal au moyen d'une pompe.

## Revendications

1. Appareil comportant un réservoir principal (4) destiné à contenir de l'eau et un réservoir intermédiaire (7) alimenté par ledit réservoir principal (4), le réservoir intermédiaire (7) comprenant une cathode (10) et une anode (11; 211) destinées à faire précipiter le carbonate de calcium et comportant un filtre (8) formant une barrière filtrante divisant le volume à l'intérieur du réservoir intermédiaire (7) entre une chambre primaire (71) recevant la cathode (10), alimentée avec l'eau du réservoir principal (4), et une chambre secondaire (72) recevant l'anode (11, 211) et comprenant au moins un orifice de puisage (72) au niveau duquel l'eau est puisée pour être utilisée dans un dispositif (5),ladite anode (11; 211) comprenant deux extrémités (11A, 11B; 211A, 211B) longitudinales entre lesquelles elle s'étend longitudinalement selon un axe X, ledit au moins un orifice de puisage (92 ; 92A, 92B ; 292) étant, en projection orthogonale sur l'axe X, situé entre les deux extrémités (11A, 11B; 211A, 211B) de l'anode.

2. Appareil selon la revendication 1, **caractérisé en ce que** ladite anode (11; 211) s'étend longitudinalement sur une longueur L et **en ce que** l'orifice de puisage (92 ; 92A, 92B ; 292) est, en projection orthogonale sur l'axe X, compris entre deux bornes placées respectivement à 10% et à 90% de la longueur L de l'anode (11; 211) et préférentiellement situé entre deux bornes placées respectivement à 30% et à 70% de la longueur L de l'anode (11; 211).

3. Appareil selon l'une quelconque des revendications 1 à 2, **caractérisé en ce que** la distance entre l'orifice de puisage (92 ; 92A, 92B ; 292) et l'anode (11; 211) est comprise entre 0 et 1 cm.

4. Appareil selon l'une quelconque des revendications 1 à 3, **caractérisé en ce que** le réservoir intermédiaire (7) comporte un fond (70) plat et **en ce que** l'orifice de puisage (92 ; 92A, 92B ; 292) est distant du fond (70) du réservoir intermédiaire (7) d'au moins 1 cm.

5. Appareil selon l'une quelconque des revendications 1 à 4, **caractérisé en ce que** l'eau est puisée dans la chambre secondaire (72) au niveau de plusieurs orifices de puisage (92A, 92B) répartis le long de l'anode (11).

6. Appareil selon l'une quelconque des revendications 1 à 5, **caractérisé en ce que** le filtre (8) présente une porosité adaptée pour ne laisser passer que les particules présentant une taille inférieure à 50 µm et préférentiellement inférieure ou égale à 20 µm.

7. Appareil selon l'une quelconque des revendications 1 à 6, **caractérisé en ce que** le filtre (8) présente une forme cylindrique et **en ce que** le réservoir intermédiaire (7) comporte une électrode centrale (11; 211) située à l'intérieur du filtre (8) et une électrode périphérique (10) de forme cylindrique s'étendant autour du filtre (8) et de l'électrode centrale (11; 211), lesdites électrodes centrale (11; 211) et périphérique (10) étant reliées à un circuit d'alimentation électrique pour former l'anode ou la cathode.

8. Appareil selon l'une quelconque des revendications 1 à 7, **caractérisé en ce qu'**une tension continue de 20 à 50 V, et préférentiellement de l'ordre de 40 V, est appliquée entre l'anode et la cathode, avec une intensité maximale de 1A.

9. Appareil selon l'une quelconque des revendications 7 à 8, **caractérisé en ce que** l'anode (11; 211) est constituée par une électrode centrale en titane, avantageusement revêtue d'oxyde de ruthénium ou d'iridium, et **en ce que** la cathode (10) est constituée par une électrode périphérique en graphite, avantageusement en graphite grossier ou à grains moyens.

10. Appareil selon l'une quelconque des revendications 7 à 9, **caractérisé en ce que** l'anode (211) est creuse et **en ce que** l'orifice de puisage (292) est disposé à l'intérieur de l'anode creuse (211).

11. Appareil selon l'une quelconque des revendications 7 à 8, **caractérisé en ce que** l'anode est constituée par une électrode périphérique en graphite ou en nickel ou en titane, avantageusement revêtu de ruthénium ou d'iridium, et **en ce que** la cathode est constituée par une électrode centrale en inox, avantageusement tissé.

12. Appareil selon l'une quelconque des revendications 1 à 11, **caractérisé en ce que** le réservoir intermédiaire (7) comporte un orifice de vidange (73B) permettant d'évacuer le contenu de la chambre primaire (71), recevant l'anode (11 ; 211).

13. Appareil selon l'une quelconque des revendications 1 à 12, **caractérisé en ce qu'**il comporte une réserve (9) d'eau qui est alimentée par gravité par au moins un orifice de puisage (92 ; 292) et une pompe (6) venant puiser de l'eau dans la réserve (9) pour l'envoyer vers le dispositif (5).

14. Appareil selon la revendication 13, **caractérisé en ce que** ledit orifice de puisage (92 ; 292) est formé par l'extrémité supérieure d'un tuyau d'évacuation (91, 291) reliant le réservoir intermédiaire (7) à la réserve d'eau (9).

15. Appareil selon la revendication 14, **caractérisé en ce que** l'eau est puisée dans la chambre secondaire (72) avec un débit maximum compris entre 10 et 75 g/min et avantageusement de l'ordre de 50 g/min.

16. Appareil selon l'une quelconque des revendications 1 à 15, **caractérisé en ce que** ledit dispositif (5) est un dispositif pour faire chauffer de l'eau, tel un bloc chauffant d'une cafetière ou un générateur de vapeur d'un appareil de repassage/défroissage.

17. Appareil selon la revendication 16, **caractérisé en ce qu'**il comporte une base (1) génératrice de vapeur reliée par un cordon (3) à un fer à repasser (2), la base (1) intégrant un générateur de vapeur (5) et le réservoir principal (4) d'eau.

## Patentansprüche

1. Einrichtung, einen Haupttank (4) umfassend, der dazu bestimmt ist, Wasser zu enthalten, und einen Zwischentank (7), der von dem Haupttank (4) versorgt wird, wobei der Zwischentank (7) eine Kathode (10) und eine Anode (11; 211) umfasst, die dazu bestimmt sind, Calciumcarbonat zu fällen, und einen Filter (8) umfassend, der eine Filtersperre bildet, die das Volumen im Inneren des Zwischentanks (7) zwischen einer Hauptkammer (71), die die Kathode (10) aufnimmt, die mit dem Wasser aus dem Haupttank (4) versorgt wird, und einer Sekundärkammer (72), die die Anode (11, 211) aufnimmt, teilt, und mindestens eine Förderöffnung (72) umfassend, im Bereich derer das Wasser gefördert wird, um in einer Vorrichtung (5) verwendet zu werden, wobei die Anode (11; 211) zwei Längsenden (11A, 11B; 211A, 211B) umfasst, zwischen denen sie sich in Längsrichtung entlang einer Achse X erstreckt, wobei sich die mindestens eine Förderöffnung (92 ; 92A, 92B ; 292) in Orthogonalprojektion auf der Achse X befindet, die sich zwischen den beiden Enden (11A, 11B; 211A, 211B) der Anode befindet.

2. Einrichtung nach Anspruch 1, **dadurch gekennzeichnet, dass** sich die Anode (11; 211) längs über eine Länge L erstreckt, und dadurch, dass sich die Förderöffnung (92; 92A, 92B ; 292) in Orthogonalprojektion auf der Achse X befindet, die zwischen zwei Klemmen liegt, die jeweils auf 10% und auf 90% der Länge L der Anode (11; 211) liegt, und sich vorzugsweise zwischen zwei Klemmen befindet, die jeweils auf 30% und auf 70% der Länge L der Anode (11; 211) platziert sind.

3. Einrichtung nach einem der Ansprüche 1 bis 2, **dadurch gekennzeichnet, dass** der Abstand zwischen der Förderöffnung (92 ; 92A, 92B ; 292) und der Anode (11; 211) zwischen 0 und 1 cm liegt.

4. Einrichtung nach einem der Ansprüche 1 bis 3, **dadurch gekennzeichnet, dass** der Zwischentank (7) einen flachen Boden (70) umfasst, und dadurch, dass die Förderöffnung (92; 92A, 92B; 292) um mindestens 1 cm vom Boden (70) des Zwischentanks (7) beabstandet ist.

5. Einrichtung nach einem der Ansprüche 1 bis 4, **dadurch gekennzeichnet, dass** das Wasser in der Sekundärkammer (72) im Bereich mehrerer Förderöffnungen (92A, 92B) gefördert wird, die entlang der Anode (11) verteilt sind.

6. Einrichtung nach einem der Ansprüche 1 bis 5, **dadurch gekennzeichnet, dass** der Filter (8) eine Porosität aufweist, die angepasst ist, um nur Teilchen hindurch zu lassen, die eine Größe kleiner als 50 µm und vorzugsweise kleiner oder gleich 20 µm aufweisen.

7. Einrichtung nach einem der Ansprüche 1 bis 6, **dadurch gekennzeichnet, dass** der Filter (8) eine zylindrische Form aufweist und dadurch, dass der Zwischentank (7) eine mittlere Elektrode (11; 211) umfasst, die sich im Inneren des Filters (8) befindet, und eine Umfangselektrode (10) in zylindrischer Form, die sich um den Filter (8) und die mittlere Elektrode (11; 211) herum erstreckt, wobei die mittlere (11 ; 211) und die Umfangselektrode (10) an einen elektrischen Versorgungskreis angeschlossen sind, um die Anode oder die Kathode zu bilden.

8. Einrichtung nach einem der Ansprüche 1 bis 7, **dadurch gekennzeichnet, dass** eine Gleichspannung von 20 bis 50 V, und vorzugsweise in der Größenordnung von 40 V, zwischen der Anode und der Kathode, mit einer maximalen Stromstärke von 1A angelegt wird.

9. Einrichtung nach einem der Ansprüche 7 bis 8, **dadurch gekennzeichnet, dass** die Anode (11; 211) aus einer mittleren Elektrode aus Titan, vorteilhafterweise mit Ruthenium- oder Iridiumoxid beschichtet besteht, und dadurch, dass die Kathode (10) aus einer Umfangselektrode aus Graphit, vorteilhafterweise aus grobem Graphit oder mit mittlerer Körnung besteht.

10. Einrichtung nach einem der Ansprüche 7 bis 9, **dadurch gekennzeichnet, dass** die Anode (211) hohl ist, und dadurch, dass die Förderöffnung (292) im Inneren der hohlen Anode (211) angeordnet ist.

11. Einrichtung nach einem der Ansprüche 7 bis 8, **dadurch gekennzeichnet, dass** die Anode aus einer Umfangselektrode aus Graphit oder aus Nickel oder aus Titan, vorteilhafterweise mit Ruthenium oder Iridium beschichtet, besteht, und dadurch, dass die Kathode aus einer mittleren Elektrode aus Edelstahl, vorzugsweise einem Edelstahlgeflecht besteht.

12. Einrichtung nach einem der Ansprüche 1 bis 11, **dadurch gekennzeichnet, dass** der Zwischentank (7) eine Ablassöffnung (73B) umfasst, die es ermöglicht, den Inhalt der Hauptkammer (71), die die Anode (11; 211) aufnimmt, auszubringen.

13. Einrichtung nach einem der Ansprüche 1 bis 12, **dadurch gekennzeichnet, dass** sie eine Wasserreserve (9) umfasst, die durch Schwerkraft durch mindestens eine Förderöffnung (92 ; 292) und eine Pumpe (6), die Wasser in der Reserve (9) fördert, um es zur Vorrichtung (5) zu schicken, versorgt wird.

14. Einrichtung nach Anspruch 13, **dadurch gekennzeichnet, dass** die Förderöffnung (92 ; 292) durch das obere Ende eines Ausbringungsrohres (91, 291) gebildet ist, das den Zwischentank (7) mit der Wasserreserve (9) verbindet.

15. Einrichtung nach Anspruch 14, **dadurch gekennzeichnet, dass** das Wasser in der Sekundärkammer (72) mit einem maximalen Fördervolumen gefördert wird, das zwischen 10 und 75 g/min, und vorteilhafterweise in der Größenordnung von 50 g/min liegt.

16. Einrichtung nach einem der Ansprüche 1 bis 15, **dadurch gekennzeichnet, dass** die Vorrichtung (5) eine Vorrichtung zum Erwärmen von Wasser, wie ein Heizblock einer Kaffeemaschine oder ein Dampfgenerator einer Bügel-/Entknitterungseinrichtung ist.

17. Einrichtung nach Anspruch 16, **dadurch gekennzeichnet, dass** sie eine Basis (1) zum Generieren von Dampf umfasst, die durch ein Kabel (3) mit einem Bügeleisen (2) verbunden ist, wobei die Basis (1) einen Dampfgenerator (5) und den Hauptwassertank (4) einbezieht.

## Claims

1. Apparatus comprising a main reservoir (4) intended to contain water and an intermediate reservoir (7) supplied by said main reservoir (4), the intermediate reservoir (7) comprising a cathode (10) and an anode (11; 211) intended to precipitate calcium carbonate and comprising a filter (8) forming a filtering barrier dividing the volume inside the intermediate reservoir (7) between a primary chamber (71) receiving the cathode (10), supplied with water from the main reservoir (4), and a secondary chamber (72) receiving the anode (11, 211) and comprising at least one water-drawing orifice (72) at the level of which water is drawn to be used in a device (5), said anode (11; 211) comprising two longitudinal ends (11A, 11B; 211A, 211B) between which it extends longitudinally along an axis X, said at least one water-drawing orifice (92; 92A, 92B; 292) being, in orthogonal projection on the axis X, located between the two ends (11A, 11B; 211A, 211B) of the anode.

2. Apparatus according to claim 1, **characterised in that** said anode (11; 211) extends longitudinally over a length L and **in that** the water-drawing orifice (92; 92A, 92B; 292) is, in orthogonal projection on the axis X, comprised between two terminals placed respectively at 10% and at 90% of the length L of the anode (11; 211) and preferably located between two terminals placed respectively at 30% and at 70% of the length L of the anode (11; 211).

3. Apparatus according to any one of claims 1 to 2, **characterised in that** the distance between the water-drawing orifice (92; 92A, 92B; 292) and the anode (11; 211) is between 0 and 1cm.

4. Apparatus according to any one of claims 1 to 3, **characterised in that** the intermediate reservoir (7) comprises a flat bottom (70) and **in that** the water-drawing orifice (92; 92A, 92B; 292) is distant from the bottom (70) of the intermediate reservoir (7) by at least 1cm.

5. Apparatus according to any one of claims 1 to 4, **characterised in that** the water is drawn into the secondary chamber (72) at the level of several water-drawing orifices (92A, 92B) distributed along the anode (11).

6. Apparatus according to any one of claims 1 to 5, **characterised in that** the filter (8) has a porosity adapted to only let particles pass which have a size less than 50µm and preferably less than or equal to 20µm.

7. Apparatus according to any one of claims 1 to 6, **characterised in that** the filter (8) has a cylindrical shape and **in that** the intermediate reservoir (7) comprises a central electrode (11; 211) located inside the filter (8) and a peripheral electrode (10) of cylindrical shape extending around the filter (8) and the central electrode (11; 211), said central (11; 211) and peripheral (10) electrodes being connected to a power supply circuit to form the anode or the cathode.

8. Apparatus according to any one of claims 1 to 7, **characterised in that** a direct voltage of 20 to 50V, and preferably of around 40V, is applied between the anode and the cathode, with a maximum intensity of 1A.

9. Apparatus according to any one of claims 7 to 8, **characterised in that** the anode (11; 211) is constituted by a titanium central electrode, advantageously coated with ruthenium or iridium oxide, and **in that** the cathode (10) is constituted by a graphite peripheral electrode, advantageously made of coarse or medium-grain graphite.

10. Apparatus according to any one of claims 7 to 9, **characterised in that** the anode (211) is hollow and **in that** the water-drawing orifice (292) is disposed inside the hollow anode (211).

11. Apparatus according to any one of claims 7 to 8, **characterised in that** the anode is constituted by a graphite, nickel or titanium peripheral electrode, advantageously coated with ruthenium or iridium, and **in that** the cathode is constituted by a stainless steel central electrode, advantageously woven.

12. Apparatus according to any one of claims 1 to 11, **characterised in that** the intermediate reservoir (7) comprises a draining orifice (73B) enabling to discharge the content from the primary chamber (71), receiving the anode (11; 211).

13. Apparatus according to any one of claims 1 to 12, **characterised in that** it comprises a water reserve (9) which is supplied by gravity by at least one water-drawing orifice (92; 292) and a pump (6) drawing water into the reserve (9) to send it to the device (5).

14. Apparatus according to claim 13, **characterised in that** said water-drawing orifice (92; 292) is formed by the upper end of a discharge pipe (91, 291) connecting the intermediate reservoir (7) to the water reserve (9).

15. Apparatus according to claim 14, **characterised in that** the water is drawn into the secondary chamber (72) with a maximum flow rate of between 10 and 75g/min and advantageously of around 50g/min.

16. Apparatus according to any one of claims 1 to 15, **characterised in that** said device (5) is a device for heating water, such as a heating unit of a coffee maker or a steam generator of an ironing/anti-crease apparatus.

17. Apparatus according to claim 16, **characterised in that** it comprises a steam-generating base (1) connected by a cord (3) to an iron (2), the base (1) integrating a steam generator (5) and the main water reservoir (4).
